# EUROPÄISCHE PATENTANMELDUNG

(11) **EP 1 008 866 A2**
(43) Veröffentlichungstag der Anmeldung: **14.06.2000**
(21) Anmeldenummer: 99119804.5
(22) Anmeldetag: 06.10.1999
(51) Int. Cl.: G01V 15/00

(54) **Flächenhaftes Sensorelement**

(30) Priorität: 08.12.1998 DE 19856493
(71) Anmelder: Carl Freudenberg, 69469 Weinheim (DE)
(72) Erfinder: Guth, Wolfgang, Dr., 68526 Ladenburg (DE)

(57) **Zusammenfassung**

Flächenhaftes Sensorelement, bestehend aus einem Sensorkörper aus polymerem Werkstoff, in den magnetisierbare Partikel über den ganzen Querschnitt gleichmäßig verteilt eingebettet sind, wobei der Sensorkörper eine Dicke von mindestens 0,5 mm hat.

## Beschreibung

### Technisches Gebiet

Die Erfindung betrifft ein flächenhaftes Sensorelement, bestehend aus einem Sensorkörper aus polymerem Werkstoff, in den magnetisierbare Partikel über den ganzen Querschnitt gleichmäßig verteilt eingebettet sind.

### Stand der Technik

Ein solches Sensorelement ist bekannt. Es ist von großer Flexibilität und gelangt als Datenträger, der eher unter der Bezeichnung 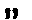 Magnetband" bekannt ist, z.B. in elektronischen Datenverarbeitungsanlagen und bei der Wiedergabe von Musikdarbietungen zur Anwendung. Dabei ist allerdings zu berücksichtigen, daß Magnetbänder dieser Art auf fremde Magnetfelder äußerst empfindlich reagieren und schon auf geringfügige Störungen des Magnetfeldes mit einem Verlust an Daten reagieren. Ihre Anwendungsmöglichkeit ist dadurch begrenzt.

### Darstellung der Erfindung

Der Erfindung liegt die Aufgabe zugrunde, ein solches Sensorelement derart weiterzuentwickeln, daß bei verbesserter Robustheit gegen fremde Magnetfelder eine unmittelbare Verwendung in Verbindung mit Maschinenbauteilen möglich ist.

Diese Aufgabe wird erfindungsgemäß bei einem Sensorelement der eingangs genannten Art mit den kennzeichnenden Merkmalen von Anspruch 1 gelöst, auf vorteilhafte Ausgestaltungen nehmen die Unteransprüche bezug.

Der erfindungsgemäße Sensorkörper unterscheidet sich von den Ausführungen nach dem Stand der Technik dadurch, daß seine Dicke mindestens 0,5 mm beträgt. Der Sensorkörper zeichnet sich dadurch in mechanischer und in elektromagnetischer Hinsicht durch eine außerordentlich große Robustheit aus, was es gestattet, ihn unmittelbar an Maschinenteilen anzubringen und z.B. zur Anzeige der Geschwindigkeit und Richtung eines relativ beweglichen Teiles zu verwenden. Entsprechende Anwendungen können sich beispielsweise auf das Detektieren der Drehgeschwindigkeit einer Welle oder eines Rades beziehen.

Der Sensorkörper läßt sich im einfachsten Falle durch Strangextrudieren eines polymeren Werkstoffes unter Verwendung eines Extruders erhalten, wobei die magnetisierbaren Partikel in den Werkstoff in gleichmäßiger Verteilung eingemischt sind. Der Basiskörper kann dabei aus irgendeinem der einschlägig verwendeten polymeren Werkstoffe bestehen, beispielsweise aus Polyethylen, Polypropylen, Polyurethan, Polyester, Polyamid, einem gegebenfalls thermoplastisch verarbeitbaren Elastomerwerkstoff oder Epoxidharz. Die grundsätzlichen Eigenschaften derartiger Werkstoffe sind dem Fachmann an sich bekannt. Sie ermöglichen es, das Sensorelement auf den verschiedensten Gebieten zur Anwendung zu bringen. Dabei ist es von besonderem Vorteil, daß das Sensorelement durch mechanische oder thermische Nachbearbeitung problemlos an die besonderen Gegebenheiten des Anwendungsfalles angepaßt werden kann. Es ist somit nicht mehr erforderlich, spezielle Werkzeuge und/oder Fertigungseinrichtungen für die Herstellung einer jeden einzelnen Ausführung eines Sensorelementes zur Verfügung zu haben.

Die Magnetisierung kann im Anschluß an die Formgebung und Verfestigung des Sensorelementes erfolgen, beispielsweise, indem dieses in den gewünschten Teilbereichen der Einwirkung eines Magnetfeldes ausgesetzt wird. Die Magnetisierung der Teilbereiche wird dabei so vorgenommen, daß das Sensorelement in den jeweiligen Teilbereichen über seinen gesamten Querschnitt polarisiert ist. Eine abriebbedingte Beschädigung der Oberfläche hat insofern nicht unmittelbar eine Beeinträchtigung der Funktionswirkung während der bestimmungsgemäßen Verwendung zur Folge.

Als zweckmäßig hat es sich erwiesen, wenn der an sich steif ausgebildete Sensorkörper biegbar gebildet ist. Bei gebräuchlichen Anwendungen sollte seine Dicke unter diesem Gesichtspunkt nicht mehr als 3 mm betragen. Das zunächst in ebener, flächenhafter Form erzeugte Sensorelement kann hierdurch im Anschluß an seine Formgebung und Verfestigung in die Gestalt eines Ringes oder Hohlzylinders überführt werden, wobei es nach einer weiteren vorteilhaften Ausgestaltung vorgesehen sein kann, die beiden, einander gegenüberliegenden Enden eines solcherart zu einem Ring geformten Streifens miteinander zu verbinden und gegebenenfalls ineinander übergehend zu verschweißen.

Des weiteren ist es möglich, daß der Sensorkörper aus einem Stanzteil besteht. Er kann beispielsweise im Bereich der magnetisierten Stellen eine größere räumlichere Ausdehnung haben als in den übrigen Bereichen, was es erleichtert, ein sauberes Signal unter schwierigen Anwendungsbedingungen zu erzeugen.

Ein bevorzugtes Anwendungsgebiet des erfindungsgemäßen Sensorkörpers in ebener oder in eingerollter Form bezieht sich auf die Verwendung an einem Dichtring zur Erfassung von Relativverdrehungen einer Welle. Insbesondere unter Kostengesichtspunkten ist eine solche Anwendung von hervorzuhebender Bedeutung.

Der Sensorkörper läßt sich verlustfrei und damit besonders kostengrünstig erzeugen, wenn die bei Herstellung entstehenden Abfälle granuliert und zurück in den Fertigungsprozess geführt werden. Dabei werden sie entweder aufs neue eingschmolzen bei Verwendung eines thermoplastischen Trägerstoffes oder in den noch flüssigen Trägerstoff eingebunden, wenn es sich dabei um einen Duroplasten oder ein Elastomer handelt. Der sich im letztgenannten Fall ergebende Verlust an Festigkeit ist zumeist vernachlässigbar, während die Magnetisierbarkeit in keinem Falle leidet.

### Kurzbeschreibung der Zeichnungen

Es zeigen:
- Figur 1: eine beispielhafte Ausführung eines flächenhaften Sensorelementes in einer perspektivischen Ansicht von oben.
- Figur 2: eine beispielhafte Ausführung eines Sensorkörpers ähnlich Figur 1, die biegbar gestaltet und zu einem Ring geformt ist. Die beiden einander gegenüber liegenden Enden 2, 3 sind dabei einander überlappend ausgebildet und untereinander unlösbar verbunden.
- Figur 3: ein flächenhaftes Sensorelement in Gestalt eines Stanzteils, das von ebener Gestalt und ähnlich wie die Ausführung aus den Figuren 1 und 2 im Anschluß an seine Formgebung und Verfestigung an örtlich getrennten Teilbereichen über seinen gesamten Querschnitt im wesentlichen gleichbleibend magnetisiert ist.

### Ausführung der Erfindung

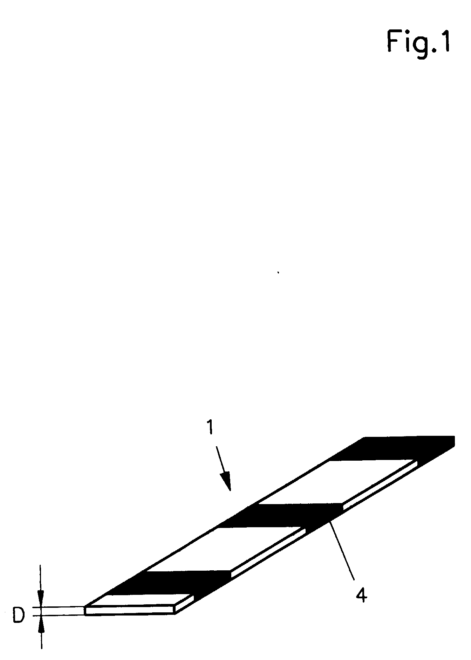

Das in Figur 1 gezeigte, flächenhafte Sensorelement besteht aus einem Sensorkörper aus Polypropylen, in den magnetisierbare Partikel über den ganzen Querschnitt gleichmäßig verteilt eingebettet sind. Der Gehalt der Partikel beträgt etwa 20 - 75, bevorzugt etwa 30 Gew.-%, abhängig vom Werkstoff.

Der Sensorkörper hat eine Dicke von 1,0 mm und ist im Anschluß an seine Formgebung und Verfestigung im Bereich der Stellen 4 über seinen gesamten Querschnitt gleichmäßig durchgehend magnetisiert. Er läßt sich in der dargestellten Form unmittelbar an ein Maschinenteil anbringen und beispielsweise verwenden, um eine linear gerichtete Hin- und Herbewegung eines relativ beweglichen Maschinenteils anzuzeigen. Dazu ist es lediglich erforderlich, in geringem Abstand von der Oberfläche des Sensorkörpers 1 eine Magnetspule anzuordnen. Die beim Auftreten einer Hin- und Herbewegung in der Magnetspule erzeugten Spannungen lassen es zu, Rückschlüsse auf die Richtung und Relativgeschwindigkeit zu ziehen.

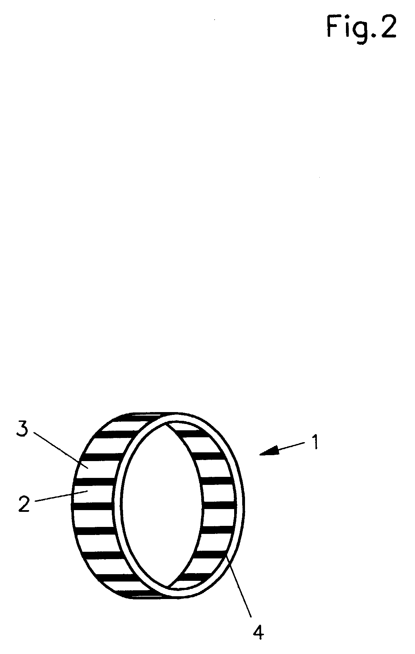

Figur 2 zeigt eine Ausführung ähnlich Figur 1, bei der ein streifenförmig ausgebildeter Sensorkörper 1 zu einem Ring geschlossen wurde, wobei die einander an der Nahtstelle gegenüberliegenden Enden 2, 3 einander in Umfangsrichtung überlappen und unlösbar miteinander verbunden sind. Der Ring wurde ähnlich wie vorstehend beschrieben an gleichmäßig in Umfangsrichtung verteilten Stellen 4 über seinen gesamten Querschnitt durchgehend magnetisiert. Er läßt sich problemlos an einer Welle und/oder an einem Dichtring anbringen, um Relativbewegungen eines zweiten Maschinenteiles anzuzeigen.

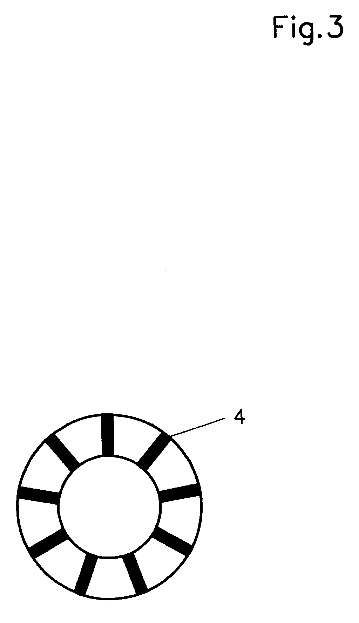

Figur 3 zeigt eine weitere Ausführung ähnlich Figur 1, aus der ein Stanzling erzeugt wurde. Dieser ist im Sinne der Darstellung an in Umfangsrichtung verteilten Stellen 4 über seinen gesamten Querschnitt durchgehend magnetisiert. Je nach Bauform kann sich auch eine solche Ausführung hervorragend zur Anbringung an Dichtringen eignen.

Das erfindungsgemäße Sensorelement läßt sich besonders kostengünstig erzeugen. Es zeichnet sich daneben durch eine besonders große Robustheit in elektromagnetischer und mechanischer Hinsicht aus. Eine Einbringung in unmittelbarer Verbindung mit Maschinenteilen ist problemlos möglich.

## Patentansprüche

1. Flächenhaftes Sensorelement, bestehend aus einem Sensorkörper (1) aus polymerem Werkstoff, in den magnetisierbare Partikel über den ganzen Querschnitt gleichmäßig verteilt eingebettet sind, **dadurch gekennzeichnet**, daß der Sensorkörper (1) eine Dicke (D) von mindestens 0,5 mm hat.

2. Sensorelement nach Anspruch 1, dadurch gekennzeichnet, daß der Sensorkörper (1) biegbar ist.

3. Sensorelement nach Anspruch 2, bei dem der Sensorkörper gebogen ist, dadurch gekennzeichnet, daß der Sensorkörper (1) unter gegenseitiger Verbindung der Enden (2, 3) zu einem Ring geformt ist.

4. Sensorelement nach einem der Ansprüche 1 bis 3, dadurch gekennzeichnet, daß der Sensorkörper (1) aus einem Stanzteil besteht.

5. Verwendung des Sensorkörpers (1) nach einem der Ansprüche 1 bis 4 in ebener oder eingerollter Form an einem Dichtring zur Erfassung von Relativverdrehungen.
